# EUROPEAN PATENT SPECIFICATION

(11) **EP 4 232 250 B1**
(45) Date of publication and mention of the grant of the patent: **10.12.2025**
(21) Application number: 21811522.8
(22) Date of filing: 19.10.2021
(51) Int. Cl.: B29C 49/00, B29C 49/22, B29B 11/14

(54) **PREFORM ASSEMBLY FOR PRODUCING A CONTAINER**
VORFORMLINGANORDNUNG ZUR HERSTELLUNG EINES BEHÄLTERS
ENSEMBLE PRÉFORME POUR LA FABRICATION D'UN CONTENANT

(30) Priority: 20.10.2020 IT 202000024688
(43) Date of publication of application: 30.08.2023
(73) Proprietor: Covi, Emanuela, 39012 Merano (BZ) (IT)
(72) Inventor: Covi, Emanuela, 39012 Merano (BZ) (IT)
(74) Representative: Petraz, Davide Luigi
(86) International application number: PCT/IT2021/050338
(87) International publication number: WO 2022/085037

(56) References cited:
- EP-B1- 3 375 593
- US-A1- 2017 313 567
- US-A1- 2018 044 160
- US-A1- 2019 152 122
- US-A1- 2019 291 923
- US-B2- 8 925 748

## Description

### FIELD OF THE INVENTION

Embodiments described here concern a preform assembly for producing a BIC type container (Bag-In-Container), comprising an external drum and an internal bag, and a container obtained by blow molding the preform assembly.

### BACKGROUND OF THE INVENTION

It is known that large volumes of carbonated or non-carbonated beverages are generally delivered to the place of consumption in containers, also known as kegs, which normally have a volume greater than 5 liters, or possibly even greater than 30 liters.

Instead of traditional metal containers, which were supplied according to a "returnable" method and therefore had to be recovered and subjected to washing and sanitizing operations before being refilled and distributed, in recent years the use of plastic containers has become increasingly widespread

For example, containers made of plastic material are increasingly used which comprise two containers coaxial to each other, of which one is an internal bag suitable to contain a beverage and the other is an external drum with support functions.

It is known that, for the production of containers of the type in question, two preforms are generally used, which are inserted one inside the other and subsequently expanded and deformed by blowing a pressurized gas by means of suitable devices.

The container is obtained from the deformation of the preforms, and comprises the drum with the bag inside, separated from each other by a hollow space.

The beverage is dispensed by compression of the internal bag by introducing, by means of suitable devices, a pressurized fluid into the hollow space between the internal bag and the external drum.

It is therefore necessary that the preforms are separated by a space, or cavity, both before and after the blow molding operation.

In known preforms, the blow molding process and consequent expansion of the two preforms can cause their facing surfaces to adhere excessively, substantially eliminating the hollow space, which can lead on the one hand to an incorrect blow molding of the preforms and on the other hand to an incorrect separation of the internal bag from the external drum.

In fact, one disadvantage that occurs due to excessive adhesion is that it can cause a high resistance to the passage of the pressurized fluid, hindering the dispensing of the beverage and/or making the container unusable.

Furthermore, in the event that the internal bag cannot completely separate from the external drum, it is not possible to guarantee the complete collapse of the internal bag and therefore the complete delivery of the beverage during the delivery, with a consequent waste of the part of the beverage that cannot be extracted.

Preform assemblies are known in which the internal preform has a plurality of ribs which protrude from an external surface thereof and extend in an axial direction.

The ribs, however, are unable to guarantee a homogeneous distribution of the fluid on the surface of the internal bag.

Document US 2018/044160 A1 describes a preform assembly for producing a container comprising an external preform and an internal preform, each comprising a neck portion in the proximity of the respective aperture and a containing portion which extends below the neck portion and ends in the closed end and each configured to form respectively an external drum and an internal bag of said container, said internal preform being internally associable with said external preform along a central longitudinal axis (X) so as to define a hollow space with said external preform, wherein said internal preform comprises, in correspondence with or in the proximity of the aperture, an annular portion protruding in a radial direction, which is configured to be positioned resting on the upper edge of the external preform and to close the hollow space at the upper part, and at least one of either said external preform or said internal preform comprises a plurality of grooves made recessed in a respective surface facing said hollow space, wherein said grooves extend at least partly in a longitudinal direction of said assembly from said neck portion toward said closed end, defining preferential channels for the passage of a fluid in said hollow space, wherein the neck portion of said external preform comprises a shoulder configured to act as a support for the neck portion of said internal preform, wherein the upper edge of said shoulder is discontinuous and has an alternation of rises and hollowed portions.

US 2019/0152122 A1 describes a preform assembly in which one or both preforms have ribs that engage with the other preform.

Preform assemblies are also described in US 8925748 B2, US 2017/313567 A1, US 2019/291923 A1 and EP 3 375 593 B1.

One disadvantage of known solutions is that they do not guarantee adequate separation of the bag and the drum on every occasion.

Another disadvantage is that the passage of the pressurized fluid can be difficult or impeded, requiring a higher pressure to allow the correct delivery of the beverage.

Another disadvantage is that even a partial obstruction of the hollow space can lead to an excessive accumulation of gas under pressure, which could be harmful to the user.

One purpose of the present invention is to guarantee the presence of a hollow space between the internal bag and the external drum sufficient to allow the passage of a fluid to compress the internal bag and promote the outflow of the fluid.

Another purpose of the invention is to provide a preform assembly which, when blow molded, does not cause continuous adhesion on an excessive portion of the preforms themselves.

Another purpose of the invention is to provide a preform assembly having a conformation such as to make reciprocal assembly simple, guaranteeing a fixed and stable coupling, so as to facilitate the blow molding operations.

One purpose of the present invention is to provide a preform assembly for producing a container in which the hollow space can be easily reached by a pressurized fluid.

Another purpose of the invention is to provide a preform assembly in which the flow of a compressed fluid is distributed uniformly along the perimeter of the internal bag.

Another purpose of the invention is to provide a preform assembly in which the hollow space between the internal bag and the external drum is such that the compressed fluid can flow from the neck of the container until it reaches the bottom in a substantially homogeneous manner.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

The present invention concerns a preform assembly for producing a container comprising an external drum and an internal bag.

The container can be suitable to contain beverages, carbonated or not carbonated, or also other types of liquids, such as water, oil, detergents, or other.

The preform assembly comprises two substantially cylindrical preforms, closed at one end, of which an external preform and an internal preform which is suitable to be inserted in the external preform in such a way that a hollow space is defined between them.

During use, the two preforms are disposed coaxial to each other along a central longitudinal axis X.

The preforms comprise respective coupling members suitable to allow a stable reciprocal positioning.

The reciprocally coupled internal preform and external preform can be expanded and deformed by means of a blow molding operation, producing respectively the bag and the drum of the container.

In accordance with the invention, at least one of either the external preform or the internal preform comprises, on the surface facing toward the other preform, grooves made in its own thickness.

The grooves therefore define preferential channels for the fluid, which have a depth greater than the average depth of the hollow space.

These grooves extend at least partly in the longitudinal direction, substantially parallel to the central axis X.

According to some embodiments, a plurality of grooves can be provided disposed angularly equidistant from each other with respect to the central axis X.

According to some embodiments, the grooves can have a depth comprised between about 5% and about 15% the average thickness of the portion of the respective preform in which they are made.

According to some embodiments, as a function of their number, the grooves have a width comprised between 2 and 4 times the respective depth.

In this way, there come to be defined preferential channels that are sufficiently wide to guarantee a correct passage of the fluid and at the same time maintain the desired resistance of the bag and/or of the drum, without excessively reducing the thickness of the respective lateral walls.

Even if, following the blow molding, the drum and the bag are at least partly in contact with each other, the fluid can still flow through the passage channels, facilitating the separation and detachment between the two elements, without needing to increase the pressure of the injected fluid.

According to some embodiments, the grooves are preferably provided in the external preform, in such a way as to exploit the greater thickness of the latter. In this way, in fact, the grooves can have a greater depth without interfering with the characteristics of resistance required for the drum.

The external preform, in fact, generally has a greater thickness than the internal preform, so that, once the blow molding operation has been carried out, the external drum deriving therefrom is more rigid than the internal bag and is therefore suitable to contrast the pressure of the fluid that is injected into the hollow space during the delivery of the beverage.

According to other embodiments, it can be provided that the grooves are present on both preforms, hollowed on the respective facing surfaces.

According to other variants, on the respective facing surfaces one preform can comprise the grooves recessed with respect to its own surface, while the other preform can comprise spacer elements protruding with respect to its own surface, which during use are placed in contact with the facing surface in order to position the two preforms correctly and are also provided with hollows suitable to define other passage channels.

The preforms comprise a containing portion intended to deform during the blow molding steps and a neck portion, in which the respective aperture is made, which remains substantially unchanged during the blow molding. The grooves extend from below the neck portion toward the bottom of the preform.

According to possible solutions, the grooves extend for at least 15% of the overall height of the preform, preferably for a segment comprised between 15% and 50%.

In this way, in the container the preferential channels are disposed below the neck zone to which the closing cap is connected and extend in correspondence with the transition zone between the neck portion and the containing potion, that is, the zone that is more subjected to deformation during the blow molding and in which a greater adherence can occur between the external drum and the internal bag.

Other embodiments described here concern a container comprising an external drum and an internal bag which are disposed coaxially to each other, wherein the drum and the bag are obtained from a preform assembly according to the invention and define a hollow space between them.

According to one aspect of the invention, the hollow space has preferential channels having a depth greater than the average thickness of the hollow space, which at least partly develop in a longitudinal direction.

According to some embodiments, a plurality of preferential channels are provided which develop in a radial pattern below the neck portion and extend substantially parallel to a central axis.

In particular, the preferential channels extend at least for the entire convex upper part of the container, or at least for a length corresponding to the transition zone between the neck portion and a part of the containing portion having a cylindrical shape.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic longitudinal section view of a preform assembly in accordance with some embodiments described here;
- fig. 2 is a schematic longitudinal section view of an external preform according to some embodiments described herein;
- fig. 3 is a view along section line II-II in fig. 2;
- fig. 4 is a partial schematic view of an internal preform according to some variants described here;
- fig. 5 is a partial schematic view of an internal preform according to one variant of the invention;
- fig. 6 is a partial schematic view of an internal preform according to another variant of the invention;
- fig. 7 is a view along section line VII-VII of fig. 5;
- fig. 8 is a view along section line VIII-VIII of fig. 1;
- fig. 9 is a schematic section view of a container made with a preform assembly according to the invention;
- fig. 10 is a three-dimensional schematic view of the upper part of a container made with a preform assembly according to the invention.

To facilitate comprehension, the same reference numbers have been used, where possible, to identify identical common elements in the drawings. It is understood that elements and characteristics of one embodiment can conveniently be combined or incorporated into other embodiments without further clarifications.

### DETAILED DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

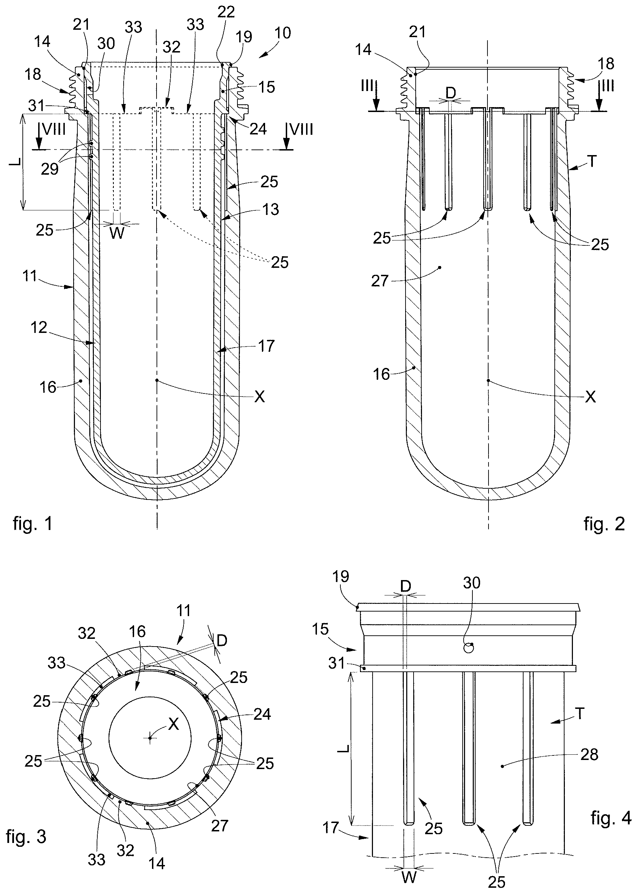

The embodiments described here with reference to fig. 1 concern a preform assembly 10 for producing a container 110. The assembly 10 comprises an external preform 11 and an internal preform 12, wherein the internal preform 12 is internally associated with the external preform 11 in such a way that a hollow space 13 is defined between them. In other words, the two preforms 11, 12 have their respective surfaces facing each other and distanced from each other.

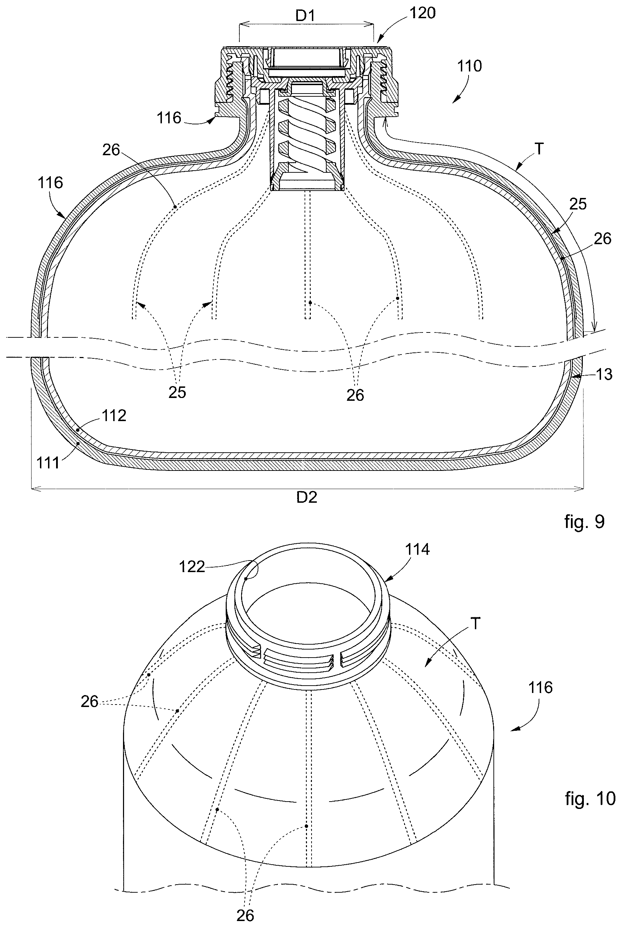

The two preforms 11, 12, by means of a blow molding process, generate respectively an external drum 111, which has structural functions and the function of supporting the container 110, and an internal bag 112, suitable to contain a liquid, for example a beverage (figs. 9-10).

The internal bag 112 and the external drum 111 are separated by a hollow space 113, into which, when the beverage is delivered, there is injected a pressurized fluid, such as air or carbon dioxide, thanks to which it is possible to cause the compression of the internal bag 112 and cause the dispensing of the liquid.

The internal bag 112 is configured to contain the liquid and is preferably flexible and compressible, while the external drum 111 is not very deformable and is configured to act as a support for the container 110 and as a contrast for the pressurized fluid that is injected into the hollow space 113.

According to some embodiments, the external preform 11 and/or the internal preform 12 can be made of polymer material, for example polyethylene terephthalate (PET). According to some embodiments, at least the internal preform 12 can be made of PET modified with additives that increase its barrier properties in order to preserve the organoleptic characteristics of the liquid that has to be contained in the internal bag 112, in particular in the case of a beverage.

In accordance with some embodiments, the preforms 11, 12 each have a tubular shape, provided with a closed end 11a, 12a and having an aperture 21, 22 at the opposite end 11b, 12b.

The preforms 11, 12 have a neck portion 14, 15 in the proximity of the respective aperture 21, 22 and a containing portion 16, 17 which extends below the neck portion 14, 15 and ends in the closed end 11a, 12a.

The container 110, obtained by blow molding the preform assembly 10, comprises a neck portion 114 defined by the neck portions 14, 15 of the preforms 11, 12, which is provided with an aperture 122, and a containing portion 116 defined by the respective containing portions 16, 17 of the preforms 11, 12.

During the blow molding step, the containing portions 16, 17 are intended to expand, considerably increasing their volume, while the neck portions 14, 15 remain substantially unchanged, maintaining their shape and structure substantially unaltered.

In particular, the transition zones T between the neck portion 14, 15 and the respective containing portion 16, 17 are those most subjected to the risk of deformations during the blow molding step, in which unwanted adhesions may occur between the external preform 11 and the internal preform 12.

The internal preform 12 is shaped in such a way that it can be inserted into the external preform 11 through the first aperture 21.

According to some embodiments, the neck portion 15 of the internal preform 12 has a size and a profile which are suitable to cooperate with the profile of the external preform 11 in such a way as to obtain a correct reciprocal positioning.

In accordance with some embodiments, the external preform 11 can have a first external thickness S1 greater than a second internal thickness S2 of the internal preform 12, so as to make the container 110 more robust and resistant to accidental impacts.

According to some embodiments, the external thickness S1 can be comprised between about 6mm and about 9mm. In this way, after the blow molding operation, it is possible to obtain an external drum 111 that has a final wall thickness sufficient to give it a determinate rigidity.

According to further embodiments, the internal thickness S2 can be comprised between about 2mm and about 5mm. In this way, after the blow molding operation, it is possible to obtain an internal bag 112 having a thickness such as to make it easily compressible and deformable.

According to some embodiments, it can be provided that the external 11 and internal 12 preforms have a constant thickness S1, S2 along their entire development.

According to possible variants, it can be provided that the thickness S1, S2 of the external 11 and internal 12 preforms is variable and differentiated between, for example, the containing portion 16, 17 and the neck portion 14, 15.

According to some embodiments, the external preform 11 comprises, on the external surface of the neck portion 14, a threaded circumferential area 18 suitable to couple to a closure element 120, for example a screw cap provided with a mating thread.

In accordance with some embodiments, the neck portion 14 of the external preform 11 cooperates with the neck portion 15 of the internal preform 12 to define a stable coupling between the two preforms 11, 12, keeping them substantially coaxial with each other and aligned along the central axis X.

According to some embodiments, the preforms 11, 12 can comprise respective coupling members 19, 20, 23, 24, 31 suitable to define a stable reciprocal coupling and positioning.

According to the invention, the internal preform 12 comprises, in correspondence with or in the proximity of the aperture 22, an annular portion 19 protruding in a radial direction, which is configured to be positioned resting on the upper edge of the external preform 11 and to close the hollow space 13 at the upper part.

According to some embodiments, the two preforms 11, 12 are configured in such a way as to be located in reciprocal contact only in defined abutment zones, in particular in correspondence with the respective upper edges. The surface of the internal preform 12 below the abutment zones is distanced from the external preform 11 by means of the hollow space 13.

According to some embodiments, the neck portion 14 of the external preform 11 has an upper portion 20 having a diameter slightly larger than the containing portion 16 and defining a housing compartment 23 for the neck portion 15 of the internal preform 12.

The housing compartment 23 is delimited at the lower part by a stepped shoulder 24 configured to provide an abutment for a protrusion 31 of the neck portion 15 of the internal preform 11.

According to some embodiments, the protrusion 31 can have an annular shape, extending over the entire circumference of the internal preform 12. In this case, the protrusion 31 can have a plurality of hollows or grooves 36 through which, during use, a fluid can pass.

According to one aspect of the present invention, on at least one of the external 11 or internal 12 preforms there are grooves 25, that is, hollows, cavities, made on the respective surface of the preform 11, 12 facing toward the hollow space 13.

In other words, at least one of either the internal surface 27 of the external preform 11 or the external surface 28 of the internal preform 12 is grooved.

These grooves 25 define preferential passage channels 26 for the fluid. In fact, in correspondence with these grooves 25, the hollow space 13 between the two preforms 11, 12 has a greater depth than the zones around them.

Since these channels 26 remain present even after the step of blow molding the assembly 10, in this way unwanted adhesions between the internal bag 112 and the external drum 111 are advantageously prevented.

According to some embodiments, a plurality of grooves 25 is provided, distanced from each other around the central axis X.

According to some embodiments, 3 or more grooves 25 can be provided, for example a number comprised between 3 and 12, preferably equally distanced from each other.

By way of example, figs. 3 and 4 show ten grooves 25, while figs. 1 and 9 show six and eight grooves 25 respectively.

According to some embodiments, the grooves 25 all have the same length, that is, the same longitudinal extension.

According to possible variants, it can be provided that at least one groove 25 has a different length to the others, that is, it is longer or shorter.

According to other variants, long grooves 25 and short grooves 25 can be provided disposed in alternation. In this way, after the blow molding, there come to be defined preferential channels 26 with different lengths in the container 110, which allow to distribute the fluid in the hollow space 113 more uniformly.

According to some embodiments, the grooves 25 can be vertical, that is, they can extend in a direction parallel to the axis X.

According to possible variants, the grooves 25 can be at least partly inclined with respect to the axis X.

According to other variants, the grooves 25 can have a helical shape.

The grooves 25 can have a constant section along their extension.

According to some embodiments, the grooves 25 can have a trapezoidal, square or rectangular cross section, with possible rounded edges, or even a substantially semicircular shape or the shape of an arc of circumference.

The trapezoidal, square, or rectangular shape, however, allows to obtain a better definition of the channels 26 following the blow molding process.

According to some embodiments, the grooves 25 extend below the respective neck portion 14, 15 toward the closed end 11a, 12a.

Preferably, the grooves 25 are positioned below the respective coupling members 19, 20, 23, 24, 31 of the two preforms.

According to some embodiments, the grooves 25 extend at least for a height equal to, or greater than, 15% of the overall height of the preform 12, 14, for example for a segment comprised between 15% and 50% of the overall height.

In particular, it can be provided that the grooves 25 extend at least for a segment corresponding to the transition zone T between the respective neck portion 14, 15 and the respective containing portion 16, 17.

By transition zone T we mean the portion of the preform 11, 12 that is most subjected to deformations during the blow molding process, which is intended to form the upper part of the container 110. In particular, it is possible to consider as the transition zone T the zone that connects the neck portion 114 of the container 110, which is substantially cylindrical and has a smaller diameter D1 substantially corresponding to that of the starting preform 11, 12, with the cylindrical part of the containing portion 116, which has a larger diameter D2.

According to some embodiments, the grooves 25 can have a depth D comprised between about 5% and about 15% of the thickness S1, S2 of the portion of the respective preform 11, 12, in particular of the thickness S1, S2 in correspondence with the containing portion 16, 17.

Preferably, the grooves 25 have a depth D comprised between about 7% and 12% of the average thickness S1, S2 of the preform 11, 12.

According to some embodiments, the grooves 25 have an elongated shape, with a longitudinal extension greater than the transverse extension, for example they can have a length L comprised between 10 and 20 times their width W.

According to some embodiments, the grooves 25 have a width W comprised between 2 and 5mm.

Preferably, the width W is comprised between 2.5 and 4 mm.

According to some embodiments, the grooves 25 have a width W greater than the respective depth D, for example comprised between about 2 and 4 times the depth D.

As described with reference to figs. 1-3, the grooves 25 are hollowed in an internal surface 27 of the external preform 11.

This solution is particularly advantageous in that it allows to obtain an excellent compromise between the requirements of creating channels 26 having a determinate width to guarantee a correct passage of the fluid, and those of maintaining a thickness sufficient to guarantee the required structural properties.

By way of example, it can be provided that the external preform 11 has a thickness S1 of about 7 mm and that the grooves 25 hollowed therein have a depth of about 1 mm.

According to other variants, for example described with reference to fig. 4, it can be provided that the grooves 25 are hollowed in an external surface 28 of the internal preform 12.

According to further embodiments, which can be combined with the previous ones, it can be provided that respective grooves 25 are present on both preforms 11, 12.

According to the invention, at least the shoulder 24 provided on the external preform 11 can have a discontinuous development, with respective rises 32 alternating with hollowed portions 33.

According to this embodiment, it can be provided that the internal preform 12 also has a mating shape to couple in a suitable way to the external preform 11.

A respective groove 25 is provided in correspondence with each rise 32 and/or hollowed portion 33.

In this way, in the event that respective grooves 25 are provided on each of the preforms 11, 12, it is possible to position them in a simple way, one facing the other, increasing the section of the passage channels 26.

According to other embodiments, it can be provided that on one of the preforms 11 or 12 there is a plurality of grooves 25 disposed parallel to the central axis X, and that on the other preform 11, 12 there is a spacer element 29 which protrudes from the respective surface 27, 28 facing the hollow space 13. The spacer element 29 allows to guarantee a greater separation between the preforms 11, 12.

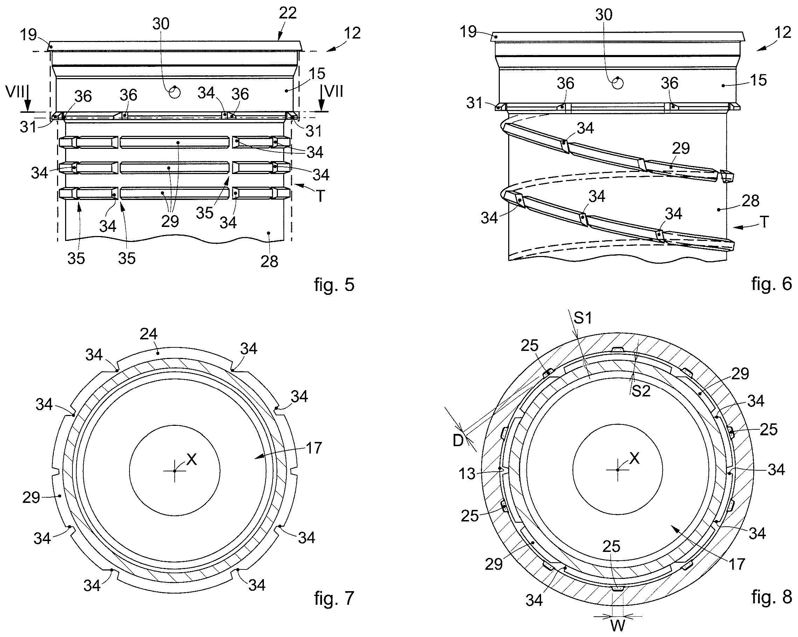

According to some embodiments, the spacer element 29 can extend in a transverse direction, that is, parallel (fig. 5) or partly inclined with respect to the central axis X, or it can have a helical shape (fig. 6).

Hollows 34 can be made in the spacer element 29 that extend parallel to the central axis X, or inclined with respect thereto, in order to create additional passage channels 35 toward the hollow space 13. The at least one spacer element 29 can be disposed in the proximity of the respective neck portion 14, 15.

According to some embodiments, the one or each spacer element 29 has a tapered shape toward its external end and the hollows 34 have a flared shape such as to give the channel 35 high stability and reinforcement.

By way of example, fig. 1 shows an embodiment in which there is a plurality of grooves 25 on the external preform 11 and there are three spacer elements 29 on the internal preform 12.

According to other embodiments, it can also be provided that the grooves 25 are present on both the external 11 and internal 12 preforms, hollowed on the respective facing surfaces 27, 28. This solution, for example, can be obtained by combining the external preform 11 of fig. 1 with the internal preform 12 of fig. 4 in an assembly 10.

According to the embodiment shown in figs. 1, 5-7, the external preform 11 comprises a plurality of grooves 25 which extend substantially in a vertical direction parallel to the central axis X and are recessed with respect to their internal surface 27, while the internal preform 12 has a plurality of spacer elements 29 disposed transversely with respect to the central axis X, which extend from their external surface 28. In this case, the hollows 34 can extend substantially parallel to the central axis X.

The spacer element 29 has a radial size substantially corresponding to the width of the hollow space 13, so that when the internal preform 12 is inserted in the external preform 11, the spacer element 29 is positioned with its outermost end in contact with the opposite surface 27, 28 of the respective external 12 or internal 11 preform, so as to guarantee a correct reciprocal positioning of the two preforms 11, 12.

According to other embodiments, there is at least one through hole 30 in the neck portion 15 of the internal preform 12 which connects the hollow space 13 with the aperture 22.

## Claims

1. Preform assembly (10) for producing a container (110) comprising an external preform (11) and an internal preform (12), each comprising a neck portion (14, 15) in the proximity of the respective aperture (21, 22) and a containing portion (16, 17) which extends below the neck portion (14, 15) and ends in the closed end (11a, 12a) and each configured to form respectively an external drum (111) and an internal bag (112) of said container (110), said internal preform (12) being internally associable with said external preform (11) along a central longitudinal axis (X) so as to define a hollow space (13) with said external preform (11), wherein said internal preform (12) comprises, in correspondence with or in the proximity of the aperture (22), an annular portion (19) protruding in a radial direction, which is configured to be positioned resting on the upper edge of the external preform (11) and to close the hollow space (13) at the upper part, and at least one through hole (30) in said neck portion (15) which connects said hollow space (13) with said aperture (22) **and** wherein at least one of either said external preform (11) or said internal preform (12) comprises a plurality of grooves (25) made recessed in a respective surface (27, 28) facing said hollow space (13), wherein said grooves (25) extend at least partly in a longitudinal direction of said assembly (10) from said neck portion (14, 15) toward said closed end (11a, 12b), defining preferential channels (26) for the passage of a fluid in said hollow space (13), wherein the neck portion (14) of said external preform (11) comprises a shoulder (24) configured to act as a support for the neck portion (15) of said internal preform (12), wherein the upper edge (29) of said shoulder (24) is discontinuous and has an alternation of rises (32) and hollowed portions (32, 33), and there is a plurality of said grooves (25) hollowed in an internal surface (27) of said external preform (11), each extending from said upper edge in correspondence with a respective rise (32) and/or hollowed portion (33) toward said closed end (11a).

2. Preform assembly (10) as in claim 1, **characterized in that** said grooves (25) extend below respective coupling members (20, 23, 24, 31) of said preforms (11, 12).

3. Preform assembly (10) as in any claim hereinbefore, **characterized in that** said grooves (25) extend for a length (L) equal to at least 15% of the overall height of the respective preform (11, 12), preferably for a length (L) comprised between 15% and 50% of said height.

4. Preform assembly (10) as in any claim hereinbefore, **characterized in that** said grooves (25) extend in a direction substantially parallel to said axis (X), equally distanced from each other.

5. Preform assembly (10) as in any claim hereinbefore, **characterized in that** said grooves (25) have a depth (D) comprised between about 5% and about 15% of the thickness (S1, S2) of said preform (11, 12) on which they are made.

6. Preform assembly (10) as in any claim hereinbefore, **characterized in that** said one or more grooves (25) have a length (L) comprised between 10 and 20 times a width (W) thereof.

7. Preform assembly (10) as in any claim hereinbefore, **characterized in that** said one or more grooves (25) have a width (W) in the direction transverse to said axis (X) comprised between 2 and 5mm.

8. Preform assembly (10) as in any claim hereinbefore, **characterized in that** on one of said preforms (11, 12) there are said grooves (25), disposed parallel to said axis (X), and on the other preform (11, 12) there are disposed one or more spacer elements (29) protruding from the respective surface (27, 28) and provided with hollows (34) defining passage channels.

9. Preform assembly (10) as in any claim hereinbefore, **characterized in that** said internal preform (12) comprises a plurality of spacer elements (29) disposed transversely to said axis (X).

10. Preform assembly (10) as in any claim hereinbefore, **characterized in that** one or more grooves (25) are hollowed in an external surface (28) of said internal preform (12).

11. Container (110) comprising an external drum (111) and an internal bag (112) which is internally associated with said external drum (111), said drum (111) and said bag (112) being obtained from respective preforms (11, 12) as in any claim hereinbefore and defining a hollow space (113) between them, wherein preferential channels (26) for the passage of a fluid are provided in said hollow space (113) which extend below a neck portion (114) of said container (110), which are defined by grooves (25) made in at least one of the respective facing surfaces of the external drum (111) or of the internal bag (112).

## Patentansprüche

1. Vorformbaugruppe (10) zum Erzeugen eines Behälters (110), die eine Außenvorform (11) und eine Innenvorform (12) aufweist, die jeweils einen Halsabschnitt (14, 15) in der Umgebung der jeweiligen Öffnung (21, 22) und einen Behälterabschnitt (16, 17) aufweisen, der sich unter dem Halsabschnitt (14, 15) erstreckt und in dem geschlossenen Ende (11a, 12a) endet, und jeweils dazu gestaltet sind, jeweils eine Außentrommel (111) und einen Innenbeutel (112) des Behälters (110) auszubilden, wobei die Innenvorform (12) mit der Außenvorform (11) entlang einer Zentrallängsachse (X) intern assoziierbar ist, zum Definieren eines Hohlraums (13) mit der Außenvorform (11), wobei die Innenvorform (12) in Übereinstimmung mit oder in der Umgebung der Öffnung (22) einen ringförmigen Abschnitt (19), der in einer Radialrichtung vorsteht, der dazu gestaltet ist, an der oberen Kante der Außenvorform (11) ruhend positioniert zu werden und den Hohlraum (13) an der oberen Partie zu schließen, und mindestens ein Durchgangsloch (30) in dem Halsabschnitt (15) aufweist, das den Hohlraum (13) mit der Öffnung (22) verbindet, und wobei die Außenvorform (11) und/oder die Innenvorform (12) eine Vielzahl Nuten (25) aufweist/en, die in einer jeweiligen Fläche (27, 28) dem Hohlraum (13) zugewandt vertieft gefertigt sind, wobei die Nuten (25) sich zumindest teilweise in einer Längsrichtung der Baugruppe (10) von dem Halsabschnitt (14, 15) in Richtung des geschlossenen Endes (11a, 12b) erstrecken, bevorzugte Kanäle (26) für das Hindurchtreten eines Fluids in den Hohlraum (13) definierend, wobei der Halsabschnitt (14) der Außenvorform (11) eine Schulter (24) aufweist, die dazu gestaltet ist, als eine Stütze für den Halsabschnitt (15) der Innenvorform (12) zu wirken, wobei die obere Kante (29) der Schulter (24) unterbrochen ist und einen Wechsel von Anhebungen (32) und ausgehöhlten Abschnitten (32, 33) hat und es eine Vielzahl der Nuten (25) in einer Innenfläche (27) der Außenvorform (11) ausgehöhlt gibt, die sich jeweils von der oberen Kante in Übereinstimmung mit einer jeweiligen Erhebung (32) und/oder einem ausgehöhlten Abschnitt (33) in Richtung des geschlossenen Endes (11a) erstrecken.

2. Vorformbaugruppe (10) nach Anspruch 1, **dadurch gekennzeichnet, dass** die Nuten (25) sich unter jeweiligen Kupplungselementen (20, 23, 24, 31) der Vorformen (11, 12) erstrecken.

3. Vorformbaugruppe (10) nach einem der vorangehenden Ansprüche, **dadurch gekennzeichnet, dass** sich die Nuten (25) über eine Länge (L) erstecken, die gleich wie mindestens 15 % der Gesamthöhe der jeweiligen Vorform (11, 12) ist, vorzugsweise über eine Länge (L), die zwischen 15 % und 50 % der Höhe enthalten ist.

4. Vorformbaugruppe (10) nach einem der vorangehenden Ansprüche, **dadurch gekennzeichnet, dass** sich die Nuten (25) in einer Richtung erstrecken, die im Wesentlichen parallel zu der Achse (X) ist, voneinander gleich beabstandet.

5. Vorformbaugruppe (10) nach einem der vorangehenden Ansprüche, **dadurch gekennzeichnet, dass** die Nuten (25) eine Tiefe (D) haben, die zwischen etwa 5 % und etwa 15 % der Dicke (S1, S2) der Vorform (11, 12) enthalten ist, an der sie gefertigt sind.

6. Vorformbaugruppe (10) nach einem der vorangehenden Ansprüche, **dadurch gekennzeichnet, dass** die mindestens eine Nut (25) eine Länge (L) hat, die zwischen 10 und 20 mal einer Breite (W) davon enthalten ist.

7. Vorformbaugruppe (10) nach einem der vorangehenden Ansprüche, **dadurch gekennzeichnet, dass** die mindestens eine Nut (25) eine Breite (W) in der zu der Achse (X) transversalen Richtung hat, die zwischen 2 und 5 mm enthalten ist.

8. Vorformbaugruppe (10) nach einem der vorangehenden Ansprüche, **dadurch gekennzeichnet, dass** es an einer der Vorformen (11, 12) die Nuten (25) gibt, die parallel zu der Achse (X) angeordnet sind, und es an der anderen Vorform (11, 12) mindestens ein Abstandhalterbauteil (29) angeordnet gibt, die/das von der jeweiligen Fläche (27, 28) vorsteht und mit Aushöhlungen (34) versehen ist, die Durchlasskanäle definieren.

9. Vorformbaugruppe (10) nach einem der vorangehenden Ansprüche, **dadurch gekennzeichnet, dass** die Innenvorform (12) eine Vielzahl Abstandhalterbauteile (29) aufweist, die transversal zu der Achse (X) angeordnet sind.

10. Vorformbaugruppe (10) nach einem der vorangehenden Ansprüche, **dadurch gekennzeichnet, dass** mindestens eine Nut (25) in einer Außenfläche (28) der Innenvorform (12) ausgehöhlt ist/sind.

11. Behälter (110), der eine Außentrommel (111) und einen Innenbeutel (112) aufweist, der mit der Außentrommel (111) intern assoziiert ist, wobei die Trommel (111) und der Beutel (112) aus jeweiligen Vorformen (11, 12) nach einem der vorangehenden Ansprüche erhalten sind und einen Hohlraum (113) zwischen sich definieren, wobei bevorzugte Kanäle (26) für das Hindurchtreten eines Fluids in dem Hohlraum (113) vorgesehen sind, die sich unter einem Halsabschnitt (114) des Behälters (110) erstrecken, die durch Nuten (25) definiert sind, die in mindestens einer der jeweiligen zugewandten Flächen der Außentrommel (111) oder des Innenbeutels (112) gefertigt sind.

## Revendications

1. Ensemble de préforme (10) pour la production d'un récipient (110) comprenant une préforme externe (11) et une préforme interne (12), chacune comprenant une partie de col (14, 15) à proximité de l'ouverture respective (21, 22) et une partie de contenant (16, 17) qui s'étend sous la partie de col (14, 15) et se termine par l'extrémité fermée (11a, 12a) et chacune configurée pour former respectivement un fût externe (111) et un sac interne (112) dudit récipient (110), ladite préforme interne (12) étant associable intérieurement à ladite préforme externe (11) le long d'un axe longitudinal central (X) de manière à définir un espace creux (13) avec ladite préforme externe (11),
dans lequel ladite préforme interne (12) comprend, en correspondance avec ou à proximité de l'ouverture (22), une partie annulaire (19) faisant saillie dans une direction radiale, qui est configurée pour être positionnée en appui sur le bord supérieur de la préforme externe (11) et pour fermer l'espace creux (13) au niveau supérieur, et au moins un trou traversant (30) dans ladite partie de col (15) qui relie ledit espace creux (13) avec ladite ouverture (22) et dans lequel au moins l'un de ladite préforme externe (11) ou de ladite préforme interne (12) comprend une pluralité de rainures (25) creusées dans une surface respective (27, 28) faisant face audit espace creux (13), dans lequel lesdites rainures (25) s'étendent au moins en partie dans une direction longitudinale dudit ensemble (10) à partir de ladite partie de col (14, 15) vers ladite extrémité fermée (11a, 12b), définissant des canaux préférentiels (26) pour le passage d'un fluide dans ledit espace creux (13), dans lequel la partie de col (14) de ladite préforme externe (11) comprend un épaulement (24) configuré pour servir de support pour la partie de col (15) de ladite préforme interne (12), dans lequel le bord supérieur (29) dudit épaulement (24) est discontinu et présente une alternance d'élévations (32) et de parties creuses (32, 33), et il y a une pluralité de ces rainures (25) creusées dans une surface interne (27) de ladite préforme externe (11), chacune s'étendant à partir dudit bord supérieur en correspondance avec une élévation (32) et/ou une partie creuse (33) respective vers ladite extrémité fermée (11a).

2. Ensemble de préforme (10) selon la revendication 1, **caractérisé en ce que** lesdites rainures (25) s'étendent sous des éléments d'accouplement respectifs (20, 23, 24, 31) desdites préformes (11, 12).

3. Ensemble de préforme (10) selon l'une quelconque des revendications précédentes, **caractérisé en ce que** lesdites rainures (25) s'étendent sur une longueur (L) égale à au moins 15 % de la hauteur totale de la préforme respective (11, 12), de préférence sur une longueur (L) comprise entre 15 % et 50 % de ladite hauteur.

4. Ensemble de préforme (10) selon l'une quelconque des revendications précédentes, **caractérisé en ce que** lesdites rainures (25) s'étendent dans une direction sensiblement parallèle audit axe (X), à égale distance les unes des autres.

5. Ensemble de préforme (10) selon l'une quelconque des revendications précédentes, **caractérisé en ce que** lesdites rainures (25) ont une profondeur (D) comprise entre environ 5 % et environ 15 % de l'épaisseur (S1, S2) de ladite préforme (11, 12) sur laquelle elles sont réalisées.

6. Ensemble de préforme (10) selon l'une quelconque des revendications précédentes, **caractérisé en ce que** ladite ou lesdites rainures (25) ont une longueur (L) comprise entre 10 et 20 fois leur largeur (W).

7. Ensemble de préforme (10) selon l'une quelconque des revendications précédentes, **caractérisé en ce que** ladite une ou plusieurs rainures (25) a une largeur (W) dans la direction transversale audit axe (X) comprise entre 2 et 5mm.

8. Ensemble de préforme (10) selon l'une quelconque des revendications précédentes, **caractérisé en ce que** sur l'une desdites préformes (11, 12) sont disposées lesdites rainures (25), disposées parallèlement audit axe (X), et sur l'autre préforme (11, 12) sont disposés un ou plusieurs éléments d'espacement (29) faisant saillie de la surface respective (27, 28) et pourvus de creux (34) définissant des canaux de passage.

9. Ensemble de préformes (10) selon l'une quelconque des revendications précédentes, **caractérisé en ce que** ladite préforme interne (12) comprend une pluralité d'éléments d'espacement (29) disposés transversalement audit axe (X).

10. Ensemble de préforme (10) selon l'une quelconque des revendications précédentes, **caractérisé en ce qu'**une ou plusieurs rainures (25) sont creusées dans une surface externe (28) de ladite préforme interne (12).

11. Récipient (110) comprenant un fût externe (111) et un sac interne (112) qui est associé intérieurement audit fût externe (111), ledit fût (111) et ledit sac (112) étant obtenus à partir de préformes respectives (11, 12) selon l'une quelconque des revendications précédentes et définissant un espace creux (113) entre eux
dans lequel des canaux préférentiels (26) pour le passage d'un fluide sont prévus dans ledit espace creux (113) qui s'étend sous une partie de col (114) dudit récipient (110), qui sont définis par des rainures (25) réalisées dans au moins l'une des surfaces respectives du fût externe (111) ou du sac interne (112) se faisant face.
